# EUROPÄISCHE PATENTSCHRIFT

(11) **EP 3 337 359 B1**
(45) Veröffentlichungstag und Bekanntmachung des Hinweises auf die Patenterteilung: **11.03.2020**
(21) Anmeldenummer: 16754462.6
(22) Anmeldetag: 10.08.2016
(51) Int. Cl.: A47G 1/17

(54) **HALTEKÖRPER, HALTEVORRICHTUNG UND VERFAHREN ZUR MONTAGE EINER HALTEVORRICHTUNG**
RETAINING BODY, RETAINING DEVICE AND METHOD FOR INSTALLING A RETAINING DEVICE
CORPS DE RETENUE, DISPOSITIF DE RETENUE ET PROCÉDÉ DE MONTAGE D'UN DISPOSITIF DE RETENUE

(30) Priorität: 21.08.2015 DE 102015215980
(43) Veröffentlichungstag der Anmeldung: 27.06.2018
(73) Patentinhaber: tesa SE, 22848 Norderstedt (DE)
(72) Erfinder: FASTERMANN, Franz, 25337 Elmshorn (DE); STRIBERNY, Tanja, 20357 Hamburg (DE); MASSON, Martje, 20148 Hamburg (DE); KELLER, Oliver, 22307 Hamburg (DE)
(86) Internationale Anmeldenummer: PCT/EP2016/069002
(87) Internationale Veröffentlichungsnummer: WO 2017/032598

(56) Entgegenhaltungen:
- WO-A2-2009/120455
- CH-A- 398 921
- US-A- 5 558 307
- US-A1- 2007 102 601

## Beschreibung

Die vorliegende Erfindung betrifft einen Haltekörper zur Befestigung an einer Oberfläche mittels eines doppelseitig wirksamen Klebestreifens gemäß dem Oberbegriff von Anspruch 1, eine Haltevorrichtung mit einem solchen Haltekörper sowie ein Verfahren zur Montage einer Haltevorrichtung.

Selbstklebend befestigbare Haltekörper zum Anbringen von Objekten an Wänden und anderen Oberflächen sind in vielfältigen Ausführungsformen bekannt. Solche Haltekörper werden eingesetzt, um Objekte, wie beispielsweise gerahmte Bilder, an vertikalen Wandoberflächen oder an Wandbelägen werkzeuglos zu befestigen. Im Handel sind solche Haltekörper beispielsweise als selbstklebende Haken oder Klebehaken erhältlich. Dabei handelt es sich üblicherweise um Haltekörper mit einem Grundkörper, der eine flache, glatte Rückfläche aufweist. Die Rückfläche des Haltekörpers kann mit einem flächigen, doppelseitig wirksamen Klebemittel, beispielsweise einem doppelseitig wirksamen Klebestreifen, auf eine Oberfläche oder eine Wand geklebt werden. Von einer der Wand oder Oberfläche abgewandten Sichtseite erstreckt sich nach dem Anbringen des Haltekörpers ein vorspringendes Tragelement, welches beispielsweise hakenförmig oder pilzförmig ausgebildet ist, in den Raum, so dass an dem Tragelement ein Gegenstand aufgehängt werden kann.

Das doppelseitig wirksame Klebemittel kann dabei bereits herstellerseitig auf der Rückfläche des Haltekörpers angebracht sein. Der Anwender zieht dann eine auf der Haftfläche angeordnete Schutzfolie von der der Rückfläche des Haltekörpers gegenüberliegenden Haftfläche ab und kann somit den Haltekörper klebend befestigen. Ebenso bekannt sind doppelseitig klebende Mittel, die separat bereitgestellt werden, beispielsweise doppelseitig wirksames Klebeband oder Klebestreifen. Bei diesen sind die beiden klebenden Hauptflächen von einer abziehbaren Schutzfolie bedeckt, welche vor der Montage des Haltekörpers entfernt werden muss.

Ferner sind im Handel auch wiederablösbare selbstklebende Mittel erhältlich, die sich nach der Verklebung durch dehnendes Verstrecken in einer Richtung annähernd parallel zur Wand aus der Klebefuge zwischen Wand und Haltekörper lösen lassen, so dass sich der Haltekörper ohne Beschädigung des Untergrunds wieder von diesem entfernen lässt. Selbstklebende Artikel dieser Art sind beispielsweise aus den Patentanmeldungen DE 33 31 016 A1 oder DE 42 22 849 A1 bekannt. Üblicherweise sind diese Klebestreifen hinter dem Haltekörper so verklebt, dass ein mit der Hand greifbarer und nicht klebend ausgerüsteter Abschnitt des Klebestreifens für das dehnende Entkleben erreichbar bleibt.

Aus EP 0 590 391 A1 ist ein wiederablösbarer, selbstklebender Haken bekannt, welcher mit einer Klebefolie kombiniert ist, wobei der Haken durch eine Dehnung des Klebestreifens in Richtung der Wandebene entklebbar ist. Dazu trägt ein Grundkörper, an dem der Klebestreifen angebracht ist, einen hakenförmigen Vorsprung zum Aufhängen von Objekten.

Aus EP 1 831 324 A1 ist ein Haltekörper mit einer speziellen Oberflächenstruktur bekannt, welche beim Andrücken ihre Reflexionseigenschaften ändert und so die Bereiche anzeigt, die bereits angedrückt wurden. Die Herstellung dieser Oberflächenstruktur ist jedoch aufwendig und kostenintensiv.

Aus US 2007/0295436 A1 ist eine Haltevorrichtung mit einem Rahmen und darin liegenden Bereichen mit geringerer Wandstärke bekannt, wobei auf der Rückfläche der Haltevorrichtung angebrachte selbstklebende Klebestreifen mit Hilfe eines Werkzeugs durch die Bereiche mit der geringeren Wandstärke hindurch angedrückt werden können. Die Klebestreifen können dabei zugentklebbar sein. Nachteilig an dieser Lösung ist jedoch, dass ein zusätzliches Werkzeug zum Andrücken der Haltevorrichtung benötigt wird, sowie die symmetrische Anordnung der Andruckflächen, welche die tatsächlich auf die Haltevorrichtung wirkenden Kräfte unberücksichtigt lässt.

Aus US 4 309 011 A ist ein Haltekörper mit kreuzförmig angeordneten Stäben bekannt, welche die auf die Haltevorrichtung wirkenden Kräfte vom Punkt der Krafteinleitung innerhalb der Umrisse einer Klebefolie auf diese Klebefolie verteilen soll. Nachteilig hierbei ist jedoch, dass je nach Anordnung des Halteelements mindestens einer der Stäbe entlastet ist und es somit nicht zu einer gleichmäßigen Pressung durch die Stäbe auf die Klebefolie kommt.

Aus WO 2009/120455 A2 ist eine zweiteilige Haltevorrichtung bekannt, welcher durch eine Dehnung eines Klebestreifens in Richtung der Wandebene entklebbar ist. Die Haltevorrichtung weist einen Haltekörper gemäß dem Oberbegriff von Anspruch 1 auf. An dem Haltekörper, an dem der Klebestreifen und ein Zubehörteil angebracht sind, sind hervorstehenden Tragelemente für das Zubehörteil und Verstärkungsrippen ausgebildet.

Bei gattungstypischen Haltevorrichtungen ist eine ungenügende Benetzung des Untergrundes durch den Klebstoff des Klebestreifens vor allem im lokalen Bereich über der lasteintragenden Struktur kritisch. Dort wirken Zugnormalspannungen, welche ein Abschälen der Klebefläche von der Oberfläche begünstigen, womit es zu einem Versagen der Haltevorrichtung kommen kann.

Aufgabe der Erfindung ist es, einen Haltekörper und ein Verfahren bereitzustellen, welche die aus dem Stand der Technik bekannten Nachteile überwinden und bei gleichen Dimensionen ein besseres Klebeergebnis und somit höhere Lasten ermöglichen bzw. bei gleicher Last ein stabileres Klebeergebnis sicherstellen.

Die Aufgabe wird durch einen Haltekörper mit den Merkmalen von Anspruch 1 gelöst. Dazu sind an dem Grundkörper des Haltekörpers Verstärkungsrippen ausgebildet, welche die Vorderfläche des Grundkörpers in mindestens zwei unterschiedlich große Andruckflächen unterteilen. Dadurch wird bei gleicher Andruckkraft auf die beiden Andruckflächen an der kleineren Andruckfläche eine höhere Flächenpressung auf einen zwischen dem Haltekörper und der Wandoberfläche befestigten Klebestreifen erreicht als an der größeren Andruckfläche. Daher wirkt in einem der kleineren Andruckfläche entsprechenden Bereich des Klebestreifens eine entsprechend größere Flächenpressung auf die Klebefläche, so dass insgesamt ein verbessertes Klebeergebnis erzielt werden kann. Erfindungsgemäß ist es möglich, die Klebekraft durch die Bemessung der Flächengrößen der Andruckflächen gezielt so zu wählen, dass diese in bestimmten Abschnitten größer ist.

Durch die in den abhängigen Ansprüchen ausgeführten Maßnahmen sind vorteilhafte Weiterbildungen und Verbesserungen des im unabhängigen Anspruch offenbarten Haltekörpers beschrieben.

Erfindungsgemäß sind ausgehend von einem Kraftangriffspunkt mindestens eine in Gegenrichtung zu der Hauptlastrichtung angeordnete Andruckfläche vorgesehen und mindestens eine in der Hauptlastrichtung angeordnete Andruckfläche vorgesehen, die größer ist als die in der Gegenrichtung angeordnete Andruckfläche. Bei einem Anbringen des Haltekörpers an einer senkrechten Oberfläche ist die Hauptlastrichtung durch die Gewichtskraft eines an dem Haltekörper aufgehängten Objekts definiert. In diesem Fall sind vorzugsweise mindestens eine kleinere Andruckfläche oberhalb des Tragelements und mindestens eine größere Haltefläche unterhalb des Tragelements vorgesehen.

Gemäß einer vorteilhaften Ausführungsform ist vorgesehen, dass die Verstärkungsrippen die Vorderfläche in mindestens drei Andruckflächen unterteilen, wobei vorteilhaft die Summe der ausgehend von dem Kraftangriffspunkt in Hauptlastrichtung angeordneten Andruckflächen größer ist als die Summe der ausgehend von dem Kraftangriffspunkt in der Gegenrichtung angeordneten Andruckflächen. Durch die mindestens drei Andruckflächen kann ein optimales Verhältnis von Klebeergebnis und Steifigkeit des Haltekörpers erzielt werden.

Erfindungsgemäß ist vorgesehen, dass die Verstärkungsrippen einstückig mit und an dem Grundkörper angeformt sind. Durch eine einstückige, integrale Verstärkungsstruktur ist eine besonders günstige Herstellung des Haltekörpers möglich. Zudem kann die Verstärkungsstruktur damit besonders sicher in den Haltekörper integriert werden.

Gemäß einer vorteilhaften Weiterbildung ist vorgesehen, dass in der Ansicht auf die Vorderfläche des Grundkörpers die Flächeninhalte der Verstärkungsrippen geringer als die Flächeninhalte der Andruckflächen sind. Um hinreichend Platz für die Andruckflächen zu lassen, sollten die Verstärkungsrippen nicht zu viel Fläche einnehmen.

Gemäß einer weiteren vorteilhaften Weiterbildung ist vorgesehen, dass eine Normalprojektion des Tragelements auf die Rückfläche des Grundkörpers außerhalb der entsprechenden Normalprojektionen der Andruckflächen liegt. Somit sind die Andruckflächen leicht zugänglich und können leicht mit einer Fingerbeere angedrückt werden.

Gemäß einer weiteren vorteilhaften Weiterbildung ist vorgesehen, dass der Grundkörper einseitig geschäftet ist. Unter einer einseitigen Schäftung ist in diesem Zusammenhang eine Verjüngung des Querschnitts des Grundkörpers in Richtung der Oberkante zu verstehen.

Gemäß einer weiteren vorteilhaften Weiterbildung ist vorgesehen, dass der Haltekörper auf der Grundlage (d.h. mit mindestens 50 Gewichtsprozent) eines thermoplastischen Materials hergestellt ist. Thermoplastische Materialien weisen eine vergleichsweise hohe Festigkeit auf und harmonieren mit den zur Befestigung verwendeten Klebemitteln des doppelseitig wirksamen Klebestreifens. Besonders vorteilhaft ist dabei, wenn das Material des Halterkörpers faserverstärkt ist. Durch die Verwendung von Glasfasern oder Karbonfasern lässt sich die Festigkeit des thermoplastischen Materials weiter steigern und die Gefahr von Brüchen reduzieren. Dabei liegt der Faseranteil bevorzugt zwischen 20 Gewichtsprozent und 40 Gewichtsprozent, wodurch die Festigkeit des Haltekörpers gesteigert werden kann. Höhere Faseranteile sind möglich.

Gemäß einer weiteren vorteilhaften Weiterbildung ist vorgesehen, dass der Haltekörper auf der Grundlage eines Polyetheretherketons hergestellt ist, wobei das Polyetheretherketon vorzugsweise mit Karbonfasern verstärkt ist. Polyetheretherketone sind hochfeste und hochtemperaturbeständige Kunststoffe, die für bestimmte Anwendungsfälle, bei denen es um hohe Festigkeit und hohe Steifigkeit bei geringem Gewicht geht, vorteilhaft sind. Diese Festigkeit kann durch die Einbettung von (Karbon-)Fasern weiter gesteigert werden.

Gemäß einer weiteren Weiterbildung ist vorgesehen, dass die Verstärkungsrippen in einer beispielsweise ovalen Basis zusammenlaufen, wobei das Tragelement sich aus dieser Basis aus dem Grundkörper erhebt. Die Basis bildet somit den Kraftangriffspunkt. Die Verstärkungsrippen können ihre Wirkung besonders gut entfalten und die Biegesteifigkeit des Haltekörpers besonders gut erhöhen, wenn sie vorteilhaft in der Basis des Tragelements zusammenlaufen.

Eine vorteilhafte Ausführungsform zeichnet sich dadurch aus, dass das Tragelement in Form eines schiefen Ellipsenkegelstumpfes oder in Form eines Rosendorns mit spitz zulaufendem Ende ausgeführt ist. Zum einen können durch eine solche Formgebung auch Objekte mit kleinen Ösen an dem Haltekörper aufgehängt werden, zum anderen führt diese Formgebung zu einer günstigen Krafteinleitung der auf das Tragelement wirkenden Kräfte in die Basis bzw. in den Grundkörper.

Weiterhin ist mit Vorteil vorgesehen, dass das Tragelement an seinem freien Ende eine Haltescheibe trägt. Durch eine Haltescheibe können auch Objekte mit größeren Ösen an dem Haltekörper aufgehängt werden bzw. die Gefahr eines Abrutschens des Objekts an dem Tragelement kann reduziert werden.

Gemäß einer bevorzugten Ausführungsform weisen eine kleinere der Andruckfläche und/oder zwei kleinere der mindestens drei Andruckflächen jeweils einen Flächeninhalt von 0,6 cm² bis 2,3 cm² und/oder eine größere Andruckfläche einen Flächeninhalt von mindestens 2,5 cm² auf. Dadurch können die kleineren Andruckflächen mit einer Fingerbeere gut angedrückt werden, da der Flächeninhalt der kleineren Flächen dem Flächeninhalt eines Fingerabdrucks angepasst ist. Die größere Fläche kann mit dem Daumen angedrückt werden, so dass ein Großteil der Fläche der Vorderseite als Andruckfläche zur Verfügung steht und somit ein möglichst gutes Klebeergebnis erzielt wird.

Gemäß einer weiteren vorteilhaften Weiterbildung ist vorgesehen, dass der Grundkörper durch Seitenkanten begrenzt ist, wobei an den Seitenkanten jeweils auf gleicher Höhe Positionierungskerben ausgebildet sind. Somit ist eine einfache Ausrichtung des Haltekörpers an einer Markierung an einer Oberfläche möglich. Besonders vorteilhaft ist es dabei, wenn die Positionierungskerben auf Höhe des Tragelements ausgebildet sind, da somit die Position des Tragelements durch die Positionierungskerben angezeigt wird.

Gemäß einer weiteren vorteilhaften Weiterbildung ist vorgesehen, dass an der Rückfläche des Haltekörpers ein Entlüftungskanal ausgebildet ist. Dadurch kann beim Anbringen des Haltekörpers zwischen der Rückfläche und der Oberfläche befindliche Luft entweichen. Besonders vorteilhaft ist dabei, wenn der Entlüftungskanal zumindest abschnittsweise unter einer der Verstärkungsrippen verläuft. Somit werden die Andruckflächen nicht durch den Entlüftungskanal geschwächt, so dass die Gefahr einer Beschädigung oder eines Verformens des Haltekörpers beim Andrücken reduziert ist.

Nach einer ersten und zweiten Ausführungsform betrifft die Erfindung einen Haltekörper 3 zur Befestigung an einer Oberfläche 21 gemäß Anspruch 1, wobei der Haltekörper 3 mittels eines doppelseitigen Klebestreifens 2 mit zwei gegenüberliegenden Haftflächen an der Oberfläche 21 fixierbar ist, wobei der Haltekörper 3 einen Grundkörper 16 mit einer flachen Rückfläche 19 und eine der Rückfläche 19 gegenüberliegende Vorderfläche 27 aufweist, wobei an der Vorderfläche 27 des Grundkörpers 16 ein aus einer Ebene des Grundkörpers 16 hervorstehendes Tragelement 4 ausgebildet ist, wobei der Grundkörper 16 an der Vorderfläche 27 eine Verstärkungsstruktur mit Verstärkungsrippen 6, 7 aufweist, wobei die Verstärkungsrippen 6, 7 die Vorderfläche 27 des Grundkörpers 16 in mindestens zwei unterschiedlich große Andruckflächen 11, 13 unterteilen und wobei ausgehend von einem Kraftangriffspunkt 25 mindestens eine in Gegenrichtung zu der Hauptlastrichtung angeordnete Andruckfläche 11 vorgesehen ist und mindestens eine in der Hauptlastrichtung angeordnete Andruckfläche 13 vorgesehen ist, die größer ist als die in der Gegenrichtung angeordnete Andruckfläche 11.

Nach einer dritten Ausführungsform betrifft die Erfindung einen Haltekörper 3 nach der ersten oder zweiten Ausführungsform, dadurch gekennzeichnet, dass die Verstärkungsrippen 5, 6, 7 die Vorderfläche in mindestens drei Andruckflächen 11, 12, 13 unterteilen.

Nach einer vierten Ausführungsform betrifft die Erfindung einen Haltekörper 3 nach einem der vorangehenden Ausführungsformen, dadurch gekennzeichnet, dass eine erste Verstärkungsrippe 5 sich von dem Kraftangriffspunkt 25 des Tragelements 4 entgegen der Hauptlastrichtung erstreckt.

Nach einer fünften Ausführungsform betrifft die Erfindung einen Haltekörper 3 nach einem der vorangehenden Ausführungsformen, dadurch gekennzeichnet, dass sich eine zweite Verstärkungsrippe 6 und eine dritte Verstärkungsrippe 7 symmetrisch zu einer Symmetrieebene durch den Grundkörper 16, insbesondere spiegelsymmetrisch zu einer Längsachse parallel zur Hauptlastrichtung und durch das Tragelement 4, erstrecken.

Nach einer sechsten Ausführungsform betrifft die Erfindung einen Haltekörper 3 nach einem der vorangehenden Ausführungsformen, dadurch gekennzeichnet, dass in der Ansicht auf die Vorderfläche 27 des Grundkörpers 16 die Flächeninhalte der Verstärkungsrippen 5, 6, 7 geringer als die Flächeninhalte der Andruckflächen 11, 12, 13 sind.

Nach einer siebten Ausführungsform betrifft die Erfindung einen Haltekörper 3 nach einem der Ausführungsformen 1 bis 6, dadurch gekennzeichnet, dass eine Normalprojektion des Tragelements 4 auf die Rückfläche 19 des Grundkörpers 16 außerhalb der entsprechenden Normalprojektionen der Andruckflächen 11, 12, 13 liegt.

Nach einer achten Ausführungsform betrifft die Erfindung einen Haltekörper 3 nach einem der Ausführungsformen 1 bis 7, dadurch gekennzeichnet, dass der Grundkörper 16 einseitig geschäftet ist.

Nach einer neunten Ausführungsform betrifft die Erfindung einen Haltekörper 3 nach einem der Ausführungsformen 1 bis 8, dadurch gekennzeichnet, dass der Haltekörper 3 aus einem faserverstärkten Kunststoff hergestellt ist.

Nach einer zehnten Ausführungsform betrifft die Erfindung einen Haltekörper 3 nach einem der vorangehenden Ausführungsformen, dadurch gekennzeichnet, dass der Haltekörper 3 auf der Grundlage eines der folgenden Materialien hergestellt ist: Polystyrol (PS), insbesondere eines syndiotaktischen Polystyrols (PS-S), Styrol-Acrylnitrils (SAN), Acrylester-Styrol-Acrylnitrils (ASA), Acrylnitril-Butadien-Styrols (ABS), Polyamids (PA).

Nach einer elften Ausführungsform betrifft die Erfindung einen Haltekörper 3 nach einem der Ausführungsformen 1 bis 9, dadurch gekennzeichnet, dass der Haltekörper 3 auf der Grundlage eines Polyetheretherketons (PEEK) hergestellt ist, wobei der Haltekörper 3 insbesondere durch Heißpressen hergestellt ist.

Nach einer zwölften Ausführungsform betrifft die Erfindung einen Haltekörper 3 nach einem der vorangehenden Ausführungsformen, dadurch gekennzeichnet, dass sich die Verstärkungsrippen 5, 6, 7 sternförmig oder fächerförmig aus der Basis 25 erstrecken.

Nach einer dreizehnten Ausführungsform betrifft die Erfindung einen Haltekörper 3 nach einem der vorangehenden Ausführungsformen, dadurch gekennzeichnet, dass das Tragelement 4 in Form eines schiefen Ellipsenkegelstumpfes oder in Form eines Rosendorns mit spitz zulaufendem Ende ausgeführt ist.

Nach einer vierzehnten Ausführungsform betrifft die Erfindung einen Haltekörper 3 nach einem der vorangehenden Ausführungsformen, dadurch gekennzeichnet, dass das Tragelement 4 an seinem freien Ende eine Haltescheibe trägt.

Nach einer fünfzehnten Ausführungsform betrifft die Erfindung einen Haltekörper 3 nach einem der vorangehenden Ausführungsformen, dadurch gekennzeichnet, dass eine kleinere Andruckfläche 11 einen Flächeninhalt von 0,6 cm² bis 2,3 cm² aufweist und/oder zwei kleinere der mindestens drei Andruckflächen 11, 12 jeweils einen Flächeninhalt von 0,6 cm² bis 2,3 cm² aufweisen und/oder eine größere Andruckfläche 13 einen Flächeninhalt von mindestens 2,5 cm² aufweist.

Nach einer sechzehnten Ausführungsform betrifft die Erfindung einen Haltekörper 3 nach einem der vorangehenden Ausführungsformen, dadurch gekennzeichnet, dass der Grundkörper 16 durch Seitenkanten 31, 32 begrenzt ist, wobei an den Seitenkanten 31, 32 jeweils auf gleicher Höhe, bevorzugt auf Höhe des Tragelements 4, Positionierungskerben 14 ausgebildet sind.

Nach einer siebzehnten Ausführungsform betrifft die Erfindung einen Haltekörper 3 nach einem der vorangehenden Ausführungsformen, dadurch gekennzeichnet, dass an der Rückfläche 19 des Haltekörpers 3 ein Entlüftungskanal 20 vorgesehen ist, welcher vorzugsweise mit einem V-förmigen Profil ausgebildet ist

Nach einer achzehnten Ausführungsform betrifft die Erfindung einen Haltekörper 3 nach der siebzehnten Ausführungsform, dadurch gekennzeichnet, dass der Entlüftungskanal 20 zumindest abschnittsweise unter einem der Verstärkungsrippen 5, 6, 7, vorzugsweise unter der ersten Verstärkungsrippe 5, verläuft.

Nach einer neunzehnten Ausführungsform betrifft die Erfindung einen Haltevorrichtung 1 mit einem Haltekörper 3 nach einem der vorhergehenden Ausführungsformen und einem doppelseitig wirksamen Klebestreifen 2, welcher auf die Rückfläche 19 des Grundkörpers 16 des Haltekörpers 3 aufgebracht oder an dieser Rückfläche 19 aufbringbar ist.

Nach einer zwanzigsten Ausführungsform betrifft die Erfindung einen Haltevorrichtung 1 nach der neunzehnten Ausführungsform, dadurch gekennzeichnet, dass der doppelseitig wirkende Klebestreifen 2 einen nicht klebenden Teilabschnitt 24 aufweist, wobei der nicht klebende Teilabschnitt 24 über zumindest eine Seite der Rückfläche 19 des Grundkörpers 16 hinausragt.

Nach einer einundzwanzigsten Ausführungsform betrifft die Erfindung einen Verfahren zur Montage einer Haltevorrichtung 1 mit einem Haltekörper 3 nach einem der vorhergehenden Ausführungsformen sowie einem doppelseitig wirksamem Klebestreifen 2 mit zwei sich gegenüberliegenden haftklebrigen Klebeflächen 22, 23, die jeweils von einer Schutzfolie 28, 29 abgedeckt sind, umfassend folgende Schritte:
a) Abziehen der ersten Schutzfolie 28 von der ersten haftklebrigen Klebefläche 22 des doppelseitig wirksamen Klebestreifens 2;
b) Aufbringen der ersten haftklebrigen Klebefläche 22 des Klebestreifens 2 auf eine Oberfläche 21;
c) Abziehen der zweiten Schutzfolie 29 von der zweiten haftklebrigen Klebefläche 23 des Klebestreifens 2;
d) Aufsetzen der Rückfläche 19 des Haltekörpers 3 auf die zweite haftklebrige Klebefläche 23 des Klebestreifens 2;
e) Ausübung von Druck auf jede der Andruckflächen 11, 12, 13 des Haltekörpers 3, wobei sich die von einer der haftklebrigen Klebeflächen 22, 23 des Klebestreifens 2 benetzte Oberfläche mit jeder Ausübung von Druck auf eine Andruckfläche 11, 12, 13 erhöht.

Die Erfindung wird im Folgenden anhand bevorzugter Ausführungsformen unter Bezugnahme auf die beigefügten Figuren erläutert. Dabei zeigen:
- Fig. 1: eine erfindungsgemäße Haltevorrichtung mit einem doppelseitig wirksamen Klebestreifen und einem erfindungsgemäßen Haltekörper in perspektivischer Ansicht;
- Fig. 2: einen erfindungsgemäßen Haltekörper in der Vorderansicht;
- Fig. 3: einen erfindungsgemäßen Haltekörper in der Seitenansicht;
- Fig. 4: einen erfindungsgemäßen Haltekörper in der Rückansicht;
- Fig. 5: einen erfindungsgemäßen Haltekörper in der Vorderansicht mit Kennzeichnung einer Schnittebene A - A;
- Fig. 6: einen Schnitt A - A durch einen erfindungsgemäßen Haltekörper;
- Fig. 7: ein weiteres Ausführungsbeispiel eines erfindungsgemäßen Haltekörpers;
- Fig. 8: ein Anwendungsbeispiel zum Ablösen eines erfindungsgemäßen Haltekörpers;
- Fig. 9: weitere Ausführungsbeispiele von erfindungsgemäßen Haltekörpern;
- Fig. 10: ein Anwendungsbeispiel zur Verklebung einer erfindungsgemäßen Haltevorrichtung mit einem erfindungsgemäßen Haltekörper;
- Fig. 11: eine erfindungsgemäße Haltevorrichtung mit einem erfindungsgemäßen Haltekörper und einem zugentlasteten Klebestreifen in perspektivischer Ansicht;
- Fig. 12: ein weiteres Ausführungsbeispiel eines erfindungsgemäßen Haltekörpers; und
- Fig. 13: ein weiteres Ausführungsbeispiel eines erfindungsgemäßen Haltekörpers.

Grundsätzlich kann der Haltekörper 3 an einer beliebig orientierten Oberfläche 21 befestigt werden. Im Rahmen der Figurenbeschreibung wird ohne Beschränkung der Allgemeinheit angenommen, dass ein Haltekörper 3 an einer vertikalen (Bauteil-) Oberfläche 21, beispielsweise einer Wand, angebracht ist. Richtungsangaben wie "oben" oder "unten" beziehen sich auf einen derart positionierten Haltekörper 3. Gleiche Bauteile bzw. Bauteilabschnitte werden in der folgenden Figurenbeschreibung mit gleichen Bezugszeichen gekennzeichnet.

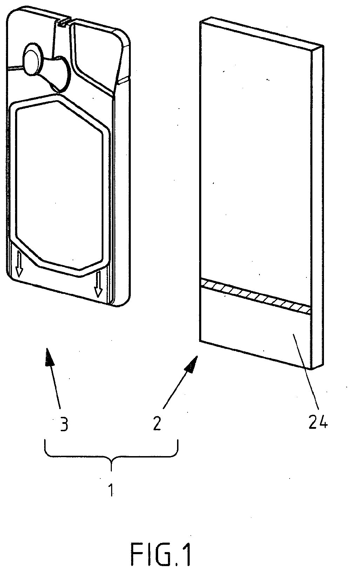

Fig. 1 zeigt eine erfindungsgemäße Haltevorrichtung 1 mit einem beidseitig wirksamen Klebestreifen 2 und einem erfindungsgemäßen Haltekörper 3 in perspektivischer Ansicht. Zum Anbringen des Haltekörpers 3 wird der Anwender zunächst den doppelseitig wirksamen Klebestreifen 2 an einer gewünschten Position auf eine Oberfläche 21 kleben und dann den Haltekörper 3 auf den Klebestreifen 2 drücken. Alternativ kann der Klebestreifen 2 auch zunächst mit einer ersten Klebefläche 22 mit einer Rückfläche 19 des Haltekörpers 3 verklebt werden, und dann mit seiner der ersten Klebefläche 22 gegenüberliegenden zweiten Klebefläche 23 an die Oberfläche 21 geklebt werden. Weiter alternativ kann der Klebestreifen 2 bereits mit einer der beiden Klebeflächen 22, 23 mit der Rückfläche 19 des Haltekörpers 3 verklebt sein, wobei die der Rückfläche 19 des Haltekörpers 3 abgewandte Klebefläche 22, 23 mit einer Schutzfolie 28, 29 versehen ist.

Der Haltekörper 3 weist einen vorzugsweise quaderförmigen Grundkörper 16 mit einer flachen, ebenen Rückfläche 19 und eine der Rückfläche 19 gegenüberliegende Vorderfläche 27 auf. Die äußere Kontur des Haltekörpers 3 ist in der Projektionsebene der Vorderfläche 27 vorzugsweise im Wesentlichen rechteckig ausgebildet, wobei eine Oberkante 17 und eine der Oberkante 17 gegenüberliegende Unterkante 18 nach der Montage horizontal ausgerichtet sind. Ferner sind an dem Grundkörper 16 zwei Seitenkanten 31, 32 ausgebildet, welche sich jeweils von der Oberkante 17 zur Unterkante 18 erstrecken und so den Grundkörper 16 in vertikaler Richtung begrenzen. Der Haltekörper 3 ist vorzugsweise flächensymmetrisch zu einer Ebene, welche sich normal zur Rückfläche 19 des Haltekörpers 3 orientiert, und durch eine zwischen den Seitenkanten 31, 32 liegende Mittelgerade verläuft.

Alternativ sind auch andere Formen des Grundkörpers 16, insbesondere mit einer ovalen oder elliptischen Projektionsfläche, möglich.

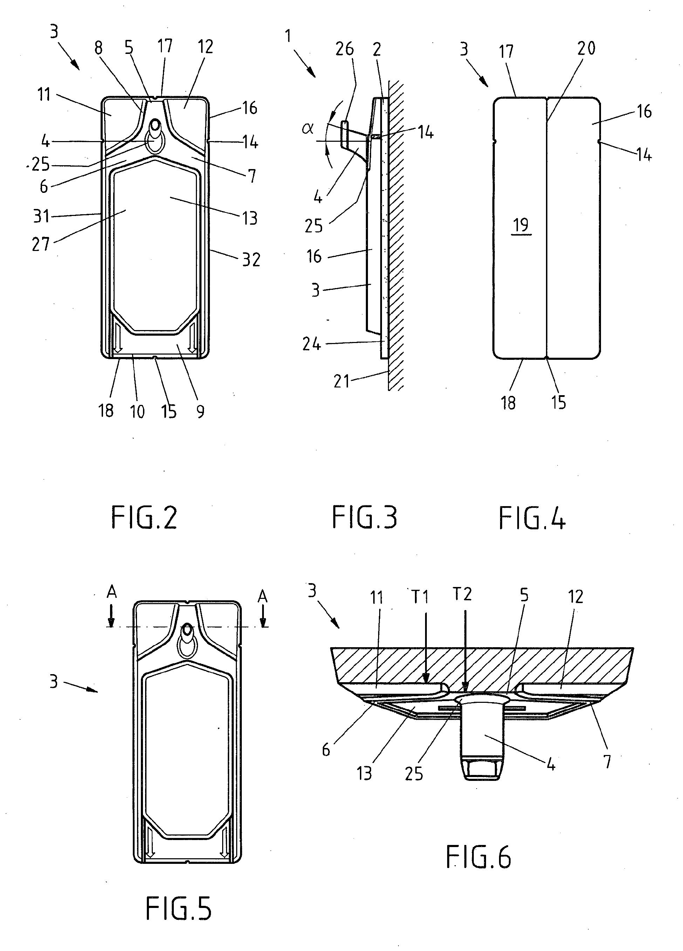

Wie in Fig. 2 dargestellt, steht aus einer Ebene des Grundkörpers 16 auf der Vorderfläche 27 ein Tragelement 4 hervor, welches ausgehend von einer ovalen oder elliptischen Basis 25 mittig zwischen den Seitenkanten 31, 32 ausgebildet ist. Der Abstand zwischen der Basis 25 des Tragelements 4 und der Oberkante 17 ist geringer als der Abstand zwischen der Basis 25 und der Unterkante 18. Vielfach wünscht sich der Anwender aus ästhetischen Gründen, dass der Haltekörper 3 durch ein daran gehaltenes Objekt verdeckt wird. Da der Haltekörper 3 angesichts einer idealerweise möglichst großen Rückfläche 19 bzw. Klebefläche nicht beliebig klein sein kann, wird dies einfach erreicht, indem das Tragelement 4 möglichst nahe an der Oberkante 17 des Haltekörpers 3 angeordnet ist.

Das Tragelement 4 weist bevorzugt die Form eines schiefen Kegelstumpfes mit ovaler oder elliptischer Grundfläche auf. Eine Gerade durch zwei Punkte auf der Oberseite des Tragelements 4, die zugleich Berührungspunkte von dessen horizontalen Tangenten der Mantelfläche darstellen, schließt mit einer horizontalen Ebene einen Winkel zwischen 0° und 90°, bevorzugt zwischen 0° und 20°, ein. Ein positiver Winkel bewirkt ein Gefälle zum Grundkörper 16 hin, so dass ein an der Haltevorrichtung 3 aufgehängtes Objekt durch die Schwerkraft in Richtung des Grundkörpers 16 gezogen wird, wodurch sich ein Kippmoment bezüglich eines in Projektionsebene der Vorderfläche 27 unterhalb des Tragelements 4 liegenden Bereichs der Verklebung reduziert.

Das Tragelement 4 ist vorteilhaft so ausgeführt, dass es mit einer Vielzahl von Befestigungssystemen, wie etwa Bilderösen, Klappösen, Seilen oder Sägezahnaufhängern, genutzt werden kann und kein separater Adapter zum Aufhängen eines Objekts notwendig wird. Somit sollte ein Durchmesser des Tragelements 4 nicht zu groß sein, damit auch Gegenstände mit kleinen Befestigungsösen daran gehängt werden können. Die Dimension des Tragelements 4 in Richtung klein ist jedoch ebenfalls durch die Festigkeit des Materials begrenzt, da ein sehr schlank dimensioniertes Tragelement 4 in der Regel weniger Gewicht tragen kann. Der Haltekörper 3 sollte ein hohes Widerstandsmoment gegen Verformungen und insbesondere Durchbiegungen aufweisen.

An der Vorderfläche 27 des Haltekörpers 3 ist eine Verstärkungsstruktur 5, 6, 7, 25 ausgebildet, welche unlösbar mit dem Grundkörper 16 verbunden ist. Die Verstärkungsstruktur 5, 6, 7, 25 umfasst drei Verstärkungsrippen 5, 6, 7, die sich in einem Bereich um die Basis 25 vereinen bzw. diese Basis integral mit ausbilden.

Die erste Verstärkungsrippe 5 erstreckt sich vorzugsweise gerade zwischen der Basis 25 des Tragelements 4 und der Oberkante 17 des Haltekörpers 3. Die zweite Verstärkungsrippe 6 verläuft ausgehend von einem Bereich, der seitlich an die Basis 25 angrenzt, zunächst in Richtung der Seitenkante 31 und setzt sich entlang der Seitenkante 31 bis zur Unterkante 18 fort. Die dritte Verstärkungsrippe 7 entspricht einer axialsymmetrischen Spiegelung der zweiten Verstärkungsrippe 6 entlang einer durch die Basis 25 verlaufenden Längsachse und führt ausgehend vom dem Bereich, der seitlich an die Basis 25 angrenzt, zunächst in Richtung der Seitenkante 32 und setzt sich parallel zu der zweiten Verstärkungsrippe 6 entlang der Seitenkante 32 bis zur Unterkante 18 fort.

Die Verstärkungsrippen 5, 6, 7 teilen die Vorderfläche des Haltekörpers 3 in drei relativ zu den Verstärkungsrippen 5, 6, 7 zurückversetzten Andruckflächen 11, 12, 13 mit geringerer Wandstärke. Eine erste Andruckfläche 11 ist begrenzt durch die erste Verstärkungsrippe 5, einen ersten Abschnitt der zweiten Verstärkungsrippe 6, die Oberkante 17 und einen Bereich der Seitenkante 31. Eine zweite Andruckfläche 12 ist bezüglich einer Spiegelung entlang einer durch die Basis 25 verlaufenden Längsachse spiegelsymmetrisch zur ersten Andruckfläche 11 und wird durch die erste Verstärkungsrippe 5, einen ersten Abschnitt der dritten Verstärkungsrippe 7, die Oberkante 17 und einen Bereich der Seitenkante 32 begrenzt.

Die durch die Verstärkungsrippen 5, 6, 7 definierten Andruckflächen 11, 12 weisen eine Form auf, welche an einen gekrümmten Teilumriss einer Fingerbeere angelehnt ist. Die erste Andruckfläche 11 und die zweite Andruckfläche 12 sind dabei gleich groß und weisen vorzugsweise einen Flächeninhalt von je 0,6 cm² bis 2,3 cm² auf. Die Flächen der ersten und der zweiten Andruckfläche 11, 12 sind jeweils kleiner als die Fläche der dritten Andruckfläche 13. Die erste und die zweite Andruckfläche 11, 12 werden als obere Andruckflächen und die Andruckfläche 13 als untere Andruckfläche bezeichnet. Bevorzugt sind die erste und die zweite Andruckfläche 11, 12 mit jeweils weniger als 2,3 cm² kleiner als die durchschnittliche Fläche eines Fingerabdrucks, so dass während einer Verklebung beim Andrücken des Haltekörpers 3 in diesem Bereich der Anpressdruck im Vergleich zu einem vollflächigen Kontakt einer Fingerbeere erhöht werden kann. Die Größe der ersten und zweiten Andruckfläche 11, 12 sollte dabei 0,6 cm² nicht unterschreiten, da sich gezeigt hat, dass andernfalls die anwenderseitige Andruckkraft bei der Montage des Haltekörpers 3 aufgrund eines Schmerzgefühls in der Fingerbeere unerwünscht reduziert ist.

Um eine Erreichbarkeit der Andruckflächen 11, 12, 13 durch die Fingerbeere sicherzustellen, ist es vorteilhaft, wenn die Normalprojektion des Tragelements 4 auf die Rückfläche 19 des Haltekörpers 3 außerhalb der entsprechenden Normalprojektion der Andruckflächen 11, 12, 13 liegt.

Die dritte Andruckfläche 13 liegt unterhalb der zweiten und dritten Verstärkungsrippe 6, 7 und wird durch die Unterkante 18 sowie die Seitenkanten 31, 32 des Haltekörpers 3 begrenzt. Die dritte Andruckfläche 13 ist dabei größer als eine der anderen Andruckflächen 11, 12 und weist einen Flächeninhalt von mindestens 2,5 cm² auf. Die Flächeninhalte aller Verstärkungsrippen 5, 6, 7 sind kleiner als die Flächeninhalte aller Andruckflächen 11, 12, 13.

Um Spannungsmaxima im oberen Bereich des Klebestreifens 2 zu reduzieren, kann eine einseitige Schäftung des Grundkörpers 16 vorgesehen werden. Unter einer einseitigen Schäftung wird in diesem Zusammenhang eine Verjüngung des Querschnitts des Grundkörpers 16 in Richtung nach oben verstanden. Wie in Fig. 3 dargestellt, verjüngt sich der Querschnitt des Grundkörpers 16 bevorzugt im Bereich vom unteren Ansatz der Basis 25 des Tragelements 4 bis zur Oberkante 17 des Grundkörpers 16. Besonders bevorzugt verjüngt sich, wie in Fig. 6 dargestellt, mit aufsteigender Höhenkoordinate die Wandstärke der Andruckflächen 11, 12, während die Differenz zwischen der Wandstärke der in diesem Bereich angeordneten ersten Verstärkungsrippe 5 und der Wandstärke einer der benachbarten Andruckflächen 11, 12 konstant bleibt.

Zur vereinfachten Positionierung können, wie in Fig. 2 und Fig. 3 dargestellt, an den gegenüberliegenden Seitenkanten 31, 32 auf gleicher Höhe Positionierungskerben 14 vorgesehen sein. Sie liegen auf einer horizontalen Tangente, die am Übergang zwischen der Basis 25 und dem Tragelement 4 die Mantelfläche des Tragelements 4 berührt. Die Positionierungskerben 14 dienen der vertikalen Positionierung des Haltekörpers 3, der somit relativ zu einer Vertikalkoordinate bzw. einem fixen Bezugspunkt montiert werden kann. Analog können in der Mitte der Oberkante 17 und der Mitte der Unterkante 18 Positionierungskerben 15 für die horizontale Ausrichtung vorgesehen sein.

Wie in Fig. 3 dargestellt, kann am freien Ende des Tragelements 4 eine Haltescheibe 26 angeordnet oder angeformt sein. Ein Bereich der Haltescheibe 26 überragt das Tragelement 4. Um auch Objekte mit sehr kleinen Ösen an das Tragelement 4 hängen zu können, kann die Haltescheibe 26 lösbar, beispielsweise durch eine Steck- oder Gewindeverbindung, mit dem Tragelement 4 verbunden sein. Alternativ kann das Tragelement 4 auch in Form eines Rosendorns spitz zulaufend gestaltet sein. Das Tragelement 4 weist dabei vorzugsweise einen Winkel α von ca. 10° bis 20° zu einer Normalen durch die Basis 25 auf, wodurch ein an dem Tragelement 4 aufgehängtes Objekt durch die auf das Objekt einwirkende Schwerkraft in Richtung der Basis 25 rutschen kann.

Fig. 4 zeigt die Rückfläche 19 des Haltekörpers 3. An der Rückfläche 19 ist ein Entlüftungskanal 20 ausgebildet, der im Profil vorzugsweise V-förmig ausgebildet ist. Der Entlüftungskanal 20 dient dazu, Lufteinschlüsse zwischen der Haftschicht des doppelseitig wirksamen Klebestreifens 2 und der Rückfläche 19 des Haltekörpers 3 zu vermeiden.

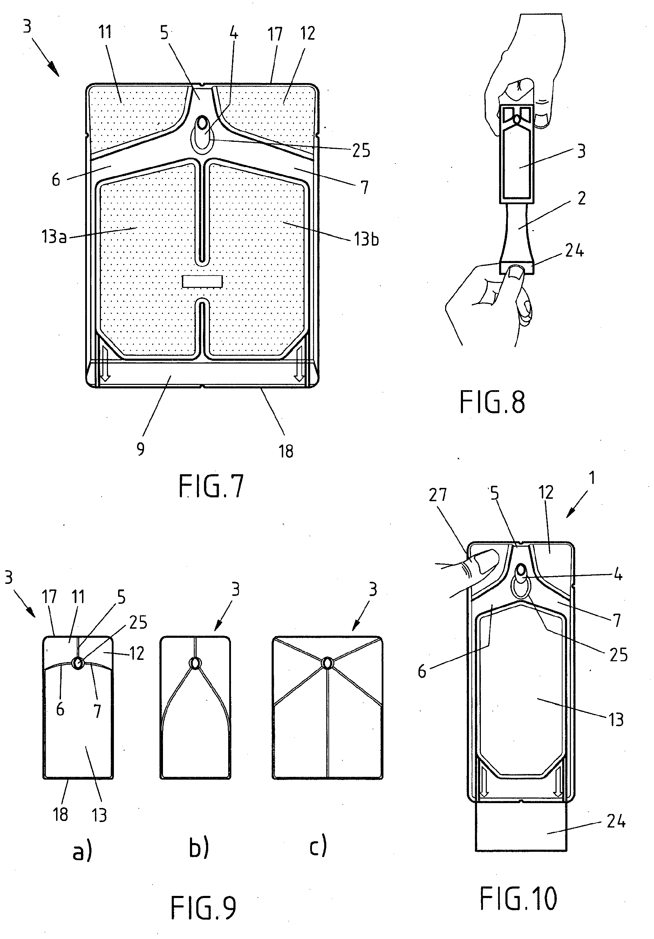

In Fig. 10 wird die Montage einer erfindungsgemäßen Haltevorrichtung 1 dargestellt. Dazu drückt der Anwender jede der drei Andruckflächen 11, 12, 13 aufeinanderfolgend mit einer Fingerbeere an, wobei sich mit jedem Andrücken die von den Klebeflächen 22, 23 des Klebestreifens 2 benetzten Flächenbereiche der Oberfläche 21 bzw. der Rückfläche 19 des Haltekörpers 3 vergrößern. Damit erhöht sich die Halteleistung des doppelseitig wirksamen Klebestreifens 2, der den Haltekörper 3 an der Oberfläche 21 hält, was insgesamt die Gebrauchseigenschaften der Haltevorrichtung 1 verbessert.

In den Fig. 9a, 9b und 9c sind weitere Ausführungsformen eines erfindungsgemäßen Haltekörpers 3 gezeigt. Bei allen Ausführungsformen wird die Vorderfläche 27 des Haltekörpers 3 durch Verstärkungsrippen 5, 6, 7 in mehrere Andruckflächen 11, 12, 13 unterteilt, wobei die Verstärkungsrippen 5, 6, 7 jeweils durch die Basis 25 des Tragelements 4 verlaufen oder an dieser Basis 25 ansetzen. Durch die Verstärkungsrippen 5, 6, 7 werden Spannungsmaxima, die besonders im Übergangsbereich zwischen dem Tragelement 4 und dem Grundkörper 16 auftreten, aufgenommen und in den Haltekörper 3 geleitet, ohne dass es zu einem Versagen des Materials kommt. Zusätzlich erhöhen die Verstärkungsrippen 5, 6, 7 die Biegesteifigkeit und das Widerstandsmoment des Haltekörpers 3, der sich durch die am Tragelement 4 angreifende Gewichtskraft des angehängten Objekts um eine horizontale Achse verformen will.

Wie in Fig. 5 und Fig. 6 dargestellt, ist die Wandstärke des Haltekörpers 3 im Bereich der Verstärkungsrippen 5, 6, 7 höher als die Wandstärke im Bereich der Andruckflächen 11, 12, 13.

Fig. 7 zeigt eine breitere Ausführung des Haltekörpers 3, die mittels zwei parallel nebeneinander angeordneter, doppelseitig wirksamer Klebestreifen an einer Oberfläche 21 angebracht werden kann. Die Andruckflächen 11, 12, 13a, 13b sind in dieser Ausführung mit einer haptisch tastbaren Struktur ausgeführt. Derartige Strukturen lassen sich beispielsweise im Zusammenwirken mit geätzten oder gravierten Oberflächen erzeugen. Eine weitere Möglichkeit besteht in der rasterartigen Anordnung einer Vielzahl von erhabenen halbkugelförmigen oder scheibenförmigen Elementen mit einem Durchmesser von 0,1 mm bis 3 mm und einem relativen Abstand zueinander von 0,7 mm bis 6 mm. Die Struktur kann auch eine kommunikative oder anleitende Funktion haben und beispielsweise an einen Fingerabdruck erinnern. Dies kann als Hilfestellung bei der Anwendung dienen.

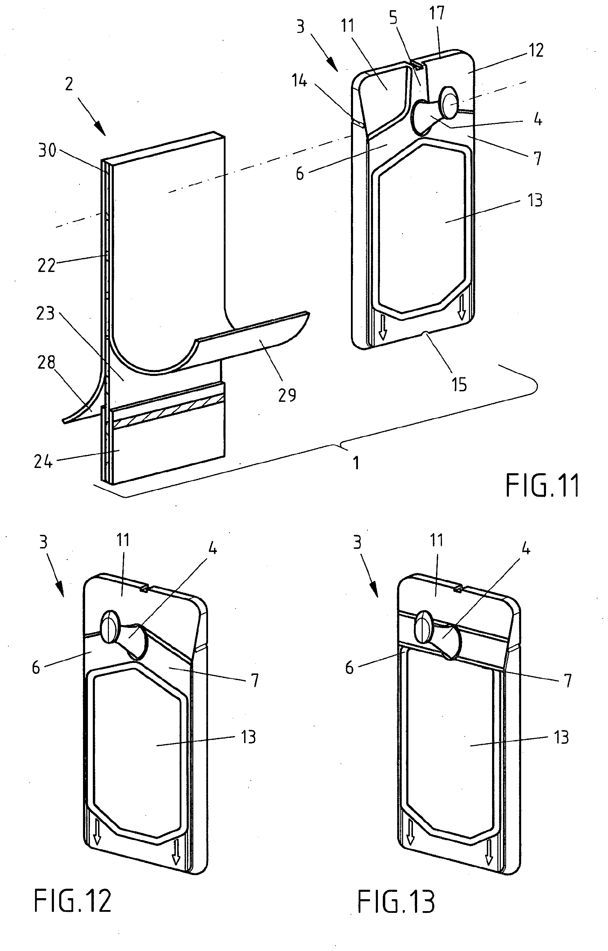

Nachfolgend ist die Verklebung der Haltevorrichtung 1 mit einem Haltekörper 3 und einem doppelseitig wirksamen Klebestreifen, wie in Fig. 11 gezeigt, beschrieben. Eine häufige Herausforderung beim Anbringen von Vorrichtungen, die mit Hilfe von doppelseitig wirksamen Klebestreifen 2 auf einer Oberfläche 21 befestigt werden, ist es, eine ausreichende Andruckkraft während der Verklebung bereitzustellen, die zusätzlich auf die Gesamtheit der haftklebrigen Klebeflächen 22, 23 des Klebestreifens 2 wirksam sein soll. Aus Versuchen ist bekannt, dass ein Anwender einen Haltekörper 3 mit rückseitig angebrachtem Klebestreifen 2 meist durch einmaliges Andrücken mit der Fingerbeere des Daumens und einer Kraft von 30 Newton bis 80 Newton auf die Vorderfläche 27 des Haltekörpers 3 anbringt. Die durchschnittliche Fläche eines Fingerabdrucks liegt im Bereich von 2 cm² bis 3 cm², womit sich bezogen auf die Kontaktfläche zwischen Haltekörper 3 und Fingerbeere ein Druckbereich zwischen 100 kPa und 400 kPa ergibt. Dies bedeutet bei aus dem Stand der Technik bekannten Haltekörpern, dass sich die nur einmal ausgeübte Andruckkraft in erster Näherung auf die Fläche des sich zwischen der externen Oberfläche 21 und dem Haltekörper 3 befindenden doppelseitig wirksamen Klebestreifens 2 verteilt. Wird eine geringe Andruckkraft von 30 Newton angenommen, resultiert daraus bei einem Klebestreifen 2 mit einer Fläche von 10 cm² ein Druck von nur noch 30 kPa. Bei diesem geringen Druck ist eine zuverlässige Benetzung des Untergrundes durch den Klebstoff des Klebestreifens 2, insbesondere auf einer rauen Oberfläche 21, nicht mehr sichergestellt. Dabei bleiben bei dieser Abschätzung weitere Effekte, wie der Verlust durch Verformungsarbeit des Klebestreifens 2, unberücksichtigt, welche den effektiven Druck auf die Klebeflächen 22, 23 nochmals verringern. Eine teilplastische Verformung des Klebestreifens 2 kann erwünscht sein, da typische Oberflächen 21, auf denen die Haltevorrichtung 1 Verwendung findet, nicht ideal glatt sind und eine teilplastische Verformung innerhalb gewisser Grenzen eine Anpassung an die reale Kontur der Oberfläche 21 ermöglicht.

Bei der erfindungsgemäßen Haltevorrichtung 1 mit dem erfindungsgemäßen Haltekörper 3 wird die insgesamt zur Verfügung stehende Andruckfläche durch die drei Andruckflächen 11, 12, 13 erhöht. Bei gleichem Kraftaufwand und einer Anpresskraft von 30 Newton wird bei einer Anpressung der drei Anpressflächen 11, 12, 13 der Anpressdruck auf 50 kPa bis 70 kPa erhöht, wodurch ein wesentlich besseres Klebeergebnis erzielt wird.

Zum Fixieren der Haltevorrichtung wird zunächst eine erste Schutzfolie 28 von einer ersten Klebefläche 22 des doppelseitig wirksamen Klebestreifens 2 abgezogen und der Klebestreifen mit der freiliegenden Klebefläche 22 zur Wand ausgerichtet. Dann wird durch einen Druck auf die der freien Klebefläche 22 gegenüberliegende Seite des Klebestreifens 2 der Klebestreifen 2 mit der Oberfläche 21 verklebt. Darauf folgend wird eine zweite Schutzfolie 29, welche eine zweite Klebefläche 23 des doppelseitig wirksamen Klebestreifens 2 abdeckt, von dem Klebestreifen 2 gelöst. Der Haltekörper 3 kann nun mit seiner Rückfläche 19 über der zweiten Klebefläche 23 des Klebestreifens 2 überdeckend positioniert und angedrückt werden. Um eine gute Benetzung der von den Klebeflächen 22, 23 kontaktierten Oberflächen 19, 21 zu erreichen, wird mit der Fingerbeere des Daumens für mehrere Sekunden Druck auf die erste Andruckfläche 11 ausgeübt. Danach wird für mehrere Sekunden Druck auf die zweite Andruckfläche 12 ausgeübt und abschließend für mehrere Sekunden mit der Daumenbeere Druck auf die dritte Andruckfläche 13 ausgeübt. Alternativ kann auch mit der Daumenbeere Druck auf die dritte Andruckfläche 13 und parallel mit den Fingerbeeren zweier weiterer Finger Druck auf die erste und zweite Andruckfläche 11, 12 ausgeübt werden.

Alternativ kann eine der Schutzfolien 28, 29 des Klebestreifens 2 oder der Klebestreifen 2 selbst zur genauen Positionierung markiert sein oder eine Kerbe tragen. Somit können die Positionierungskerben 14, 15 am Haltekörper 3 mit den Positionierungskerben am Klebestreifen zur Überdeckung gebracht werden bzw. an diesen ausgerichtet werden.

Eine weitere Möglichkeit der Positionierung des Haltekörpers 3 in Relation zum Klebestreifen 2 besteht darin, die Oberkante 17 des winklig angesetzten Haltekörpers 3 zunächst auf eine Oberkante 30 des Klebestreifens 2 aufzulegen. Darauf folgend wird der Winkel zwischen der externen Oberfläche 21 und der Rückfläche 19 des Haltekörpers 3 bei aufeinanderliegenden Oberkanten 17, 30 verkleinert, bis der Haltekörper 3 mit seiner Rückfläche 19 auf der zweiten Klebefläche 23 des Klebestreifens 2 aufliegt.

Vorteilhaft kann der Haltekörper 3 wieder spur- und rückstandslos sowie ohne Beschädigung der Oberfläche 21 und/oder des Haltekörpers 3 von der Oberfläche 21 abgelöst werden. Wie in Fig. 8 dargestellt, kann dies mit bekannten zugentklebbaren Klebestreifen 2 erreicht werden, die sich aus der Klebefuge zwischen der Oberfläche 21 und dem Haltekörper 3 durch Zug an einem hervorstehenden, nicht klebenden Teilabschnitt 24 des Klebestreifens 2 in Richtung der Verklebungsebene ablösen lassen.

Als Herstellungsmaterial des Haltekörpers 3 ist ein Kunststoffmaterial vorgesehen, welches abhängig von verschiedenen Faktoren und Einsatzorten ausgewählt werden kann. Insbesondere sollte das Herstellungsmaterial kompatibel mit der Klebstoffzusammensetzung des Klebestreifens 2 sein und daran zuverlässig haften. Ferner sollte das Herstellungsmaterial einen Widerstand gegen die gängigsten Umwelteinflüsse, wie Feuchtigkeit, UV-Strahlung oder Ozon- und Abgasbelastung, aufweisen, ohne dass sich seine Materialeigenschaften in angemessener Zeit wesentlich verschlechtern. Eine niedrige Wasseraufnahme ist für die Anwendung in Nasszellen wünschenswert, da eine Wasseraufnahme des Haltekörpers in der Regel die Güte der Verklebung schwächt.

Ein Material, das mit Klebestreifen harmoniert, die auf Styrol-Zusammensetzungen mit industrieüblichen Klebeharzen und weiteren Zuschlagstoffen basieren, ist Polystyrol. Die nachteilige Neigung zur Spannungsrissbildung kann durch Verwendung spezieller Qualitäten, wie High Impact Polystyrol (HIPS), wie beispielsweise Polystyrol 432B, reduziert werden. Alternativ ist die Verwendung von glasfaserverstärkten Polystyrol-Sorten möglich, wobei sowohl syndiotaktisches Polystyrol als auch Normal-Polystyrol verwendet werden kann. Bevorzugt liegt der (Glas-)Faseranteil zwischen 10% und 50%, besonders bevorzugt zwischen 20% und 40%, Füllstoffgehalt, wie beispielsweise beim syndiotaktischen Typ Schulatec PS-S-GF 40. Eine Bestimmung des Füllstoffgehaltes von Verstärkungsfasern ist der DIN EN ISO 11667 zu entnehmen. Als Herstellungsmaterial geeignet sind auch Styrol-Acrylnitril (SAN), Acrylester-Styrol-Acrylnitril (ASA), Acrylnitril-Butadien-Styrol (ABS) und glasfaserverstärktes Acrylnitril-Butadien-Styrol. Alternativ können auch karbonfaserverstärkte Kunststoffe, insbesondere karbonfaserverstärkte Epoxidharze oder karbonfaserverstärkte Polyetheretherketone (PEEK), verwendet werden.

Alternativ kann der Haltekörper 3 auch aus Stahl, insbesondere Edelstahl, einer Aluminiumlegierung oder einer Titanlegierung ausgeführt werden.

In Fig. 12 ist ein weiteres Ausführungsbeispiel eines erfindungsgemäßen Haltekörpers 3 dargestellt. Bei weitestgehend gleichem Aufbau wie in Fig. 2 wird im Folgenden nur auf die Unterschiede eingegangen. In einer vereinfachten Version entfällt die Verstärkungsrippe 5, so dass der Haltekörper 3 nur zwei Andruckflächen 11, 13 aufweist, wobei die obere Andruckfläche 11 über die gesamte Breite des Haltekörpers 3 verläuft und nicht wie in Fig. 2 durch die vertikale verlaufende Verstärkungsrippe in zwei Andruckflächen unterteilt ist. Alternativ können bei einer einfachen Ausführungsform mit nur zwei Andruckflächen auch die Verstärkungsrippen 6, 7 durch horizontal verlaufende Verstärkungsrippen ersetzt werden. Dadurch, dass die obere Andruckfläche 11 kleiner ist als die untere Andruckfläche 13, wird auch bei den Ausführungsformen gemäß Fig. 11 und Fig. 12 erreicht, dass der Haltekörper 3 in dem besonders stark beanspruchten Bereich oberhalb des Tragelements 4 durch die kleine Andruckfläche dem Andrücken eine höhere Flächenpressung erfährt, so dass ein besseres Klebeergebnis erzielt wird.

### Bezugszeichenliste

- 1: Haltevorrichtung
- 2: Klebestreifen
- 3: Haltekörper
- 4: Tragelement
- 5: Verstärkungsrippe
- 6: Verstärkungsrippe
- 7: Verstärkungsrippe
- 11: Andruckfläche
- 12: Andruckfläche
- 13: Andruckfläche
- 14: Positionierungskerben
- 16: Grundkörper
- 19: Rückfläche
- 20: Entlüftungskanal
- 21: Oberfläche
- 22: haftklebrige Klebefläche
- 23: haftklebrige Klebefläche
- 24: nicht klebender Teilabschnitt
- 25: Kraftangriffspunkt / Basis
- 27: Vorderfläche
- 28: Schutzfolie
- 29: Schutzfolie
- 31: Seitenkante
- 32: Seitenkante

## Patentansprüche

1. Haltekörper (3) zur Befestigung an einer Oberfläche (21), wobei der Haltekörper (3) mittels eines doppelseitigen Klebestreifens (2) mit zwei gegenüberliegenden Haftflächen an der Oberfläche (21) fixierbar ist, wobei der Haltekörper (3) einen Grundkörper (16) mit einer flachen Rückfläche (19) und eine der Rückfläche (19) gegenüberliegende Vorderfläche (27) aufweist, wobei an der Vorderfläche (27) des Grundkörpers (16) ein aus einer Ebene des Grundkörpers (16) hervorstehendes Tragelement (4) ausgebildet ist, wobei der Grundkörper (16) an der Vorderfläche (27) eine Verstärkungsstruktur mit Verstärkungsrippen (6, 7) aufweist, wobei die Verstärkungsrippen (6, 7) einstückig mit und an dem Grundkörper (16) angeformt sind und die Vorderfläche (27) des Grundkörpers (16) in mindestens zwei unterschiedlich große Andruckflächen (11, 13) unterteilen, wobei das Tragelement (4) sich aus einer in einem Kraftangriffspunkt angeordneten Basis (25) aus dem Grundkörper (16) erhebt und wobei ausgehend von dem Kraftangriffspunkt (25) mindestens eine in Gegenrichtung zu der Hauptlastrichtung angeordnete Andruckfläche (11) vorgesehen ist und mindestens eine in der Hauptlastrichtung angeordnete Andruckfläche (13) vorgesehen ist, die größer ist als die in der Gegenrichtung angeordnete Andruckfläche (11), **dadurch gekennzeichnet, dass** die Verstärkungsrippen (6, 7) in der Basis (25) zusammenlaufen.

2. Haltekörper (3) nach Anspruch 1 , **dadurch gekennzeichnet, dass** die Verstärkungsrippen (5, 6, 7) die Vorderfläche in mindestens drei Andruckflächen (11, 12, 13) unterteilen.

3. Haltekörper (3) nach Anspruch 1 oder 2, **dadurch gekennzeichnet, dass** eine erste Verstärkungsrippe (5) sich von dem Kraftangriffspunkt (25) des Tragelements (4) entgegen der Hauptlastrichtung erstreckt.

4. Haltekörper (3) nach einem der vorangehenden Ansprüche, **dadurch gekennzeichnet, dass** sich eine zweite Verstärkungsrippe (6) und eine dritte Verstärkungsrippe (7) symmetrisch zu einer Symmetrieebene durch den Grundkörper (16), insbesondere spiegelsymmetrisch zu einer Längsachse parallel zur Hauptlastrichtung und durch das Tragelement (4), erstrecken.

5. Haltekörper (3) nach einem der vorangehenden Ansprüche, **dadurch gekennzeichnet, dass** in der Ansicht auf die Vorderfläche (27) des Grundkörpers (16) die Flächeninhalte der Verstärkungsrippen (5, 6, 7) geringer als die Flächeninhalte der Andruckflächen (11, 12, 13) sind.

6. Haltekörper (3) nach einem der vorangehenden Ansprüche, **dadurch gekennzeichnet, dass** eine Normalprojektion des Tragelements (4) auf die Rückfläche (19) des Grundkörpers (16) außerhalb der entsprechenden Normalprojektionen der Andruckflächen (11, 12, 13) liegt.

7. Haltekörper (3) nach einem der vorangehenden Ansprüche, **dadurch gekennzeichnet, dass** der Grundkörper (16) einseitig geschäftet ist.

8. Haltekörper (3) nach einem der vorangehenden Ansprüche, **dadurch gekennzeichnet, dass** der Haltekörper (3) aus einem faserverstärkten Kunststoff hergestellt ist.

9. Haltekörper (3) nach einem der vorangehenden Ansprüche, **dadurch gekennzeichnet, dass** der Haltekörper (3) auf der Grundlage eines der folgenden Materialien hergestellt ist: Polystyrol (PS), insbesondere eines syndiotaktischen Polystyrols (PS-S), Styrol-Acrylnitrils (SAN), Acrylester-Styrol-Acrylnitrils (ASA), Acrylnitril-Bu- tadien-Styrols (ABS), Polyamids (PA).

10. Haltekörper (3) nach einem der Ansprüche 1 bis 8, **dadurch gekennzeichnet, dass** der Haltekörper (3) auf der Grundlage eines Polyetheretherketons (PEEK) hergestellt ist, wobei der Haltekörper (3) insbesondere durch Heißpressen hergestellt ist.

11. Haltekörper (3) nach einem der vorangehenden Ansprüche, **dadurch gekennzeichnet, dass** sich die Verstärkungsrippen (5, 6, 7) sternförmig oder fächerförmig aus der Basis (25) erstrecken.

12. Haltekörper (3) nach einem der vorangehenden Ansprüche, **dadurch gekennzeichnet, dass** das Tragelement (4) in Form eines schiefen Ellipsenkegelstumpfes oder in Form eines Rosendorns mit spitz zulaufendem Ende ausgeführt ist.

13. Haltekörper (3) nach einem der vorangehenden Ansprüche, **dadurch gekennzeichnet, dass** das Tragelement (4) an seinem freien Ende eine Haltescheibe trägt.

14. Haltekörper (3) nach einem der vorangehenden Ansprüche, **dadurch gekennzeichnet, dass** eine kleinere Andruckfläche (11) einen Flächeninhalt von 0,6 cm² bis 2, cm² aufweist und/oder zwei kleinere der mindestens drei Andruckflächen (11, 12) jeweils einen Flächeninhalt von 0,6 cm² bis 2,3 cm² aufweisen und/oder eine größere Andruckfläche (13) einen Flächeninhalt von mindestens 2,5 cm² aufweist.

15. Haltekörper (3) nach einem der vorangehenden Ansprüche, **dadurch gekennzeichnet, dass** der Grundkörper (16) durch Seitenkanten (31, 32) begrenzt ist, wobei an den Seitenkanten (31, 32) jeweils auf gleicher Höhe, bevorzugt auf Höhe des Tragelements (4), Positionierungskerben (14) ausgebildet sind.

16. Haltekörper (3) nach einem der vorangehenden Ansprüche, **dadurch gekennzeichnet, dass** an der Rückfläche (19) des Haltekörpers (3) ein Entlüftungskanal (20) vorgesehen ist, welcher vorzugsweise mit einem V-förmigen Profil ausgebildet ist.

17. Haltekörper (3) nach Anspruch 16, **dadurch gekennzeichnet, dass** der Entlüftungskanal (20) zumindest abschnittsweise unter einer der Verstärkungsrippen (5, 6, 7), vorzugsweise unter der ersten Verstärkungsrippe (5), verläuft.

18. Haltevorrichtung (1) mit einem Haltekörper (3) nach einem der vorhergehenden Ansprüche und einem doppelseitig wirksamen Klebestreifen (2), welcher auf die Rückfläche (19) des Grundkörpers (16) des Haltekörpers (3) aufgebracht oder an dieser Rückfläche (19) aufbringbar ist.

19. Haltevorrichtung (1) nach Anspruch 18, **dadurch gekennzeichnet, dass** der doppelseitig wirkende Klebestreifen (2) einen nicht klebenden Teilabschnitt (24) aufweist, wobei der nicht klebende Teilabschnitt (24) über zumindest eine Seite der Rückfläche (19) des Grundkörpers (16) hinausragt.

20. Verfahren zur Montage einer Haltevorrichtung (1) mit einem Haltekörper (3) nach einem der Ansprüche 1 bis 17 sowie einem doppelseitig wirksamem Klebestreifen (2) mit zwei sich gegenüberliegenden haftklebrigen Klebeflächen (22, 23), die jeweils von einer Schutzfolie (28, 29) abgedeckt sind, umfassend folgende Schritte:
a) Abziehen der ersten Schutzfolie (28) von der ersten haftklebrigen Klebefläche (22) des doppelseitig wirksamen Klebestreifens (2);
b) Aufbringen der ersten haftklebrigen Klebefläche (22) des Klebestreifens (2) auf eine Oberfläche (21);
c) Abziehen der zweiten Schutzfolie (29) von der zweiten haftklebrigen Klebefläche (23) des Klebestreifens (2);
d) Aufsetzen der Rückfläche (19) des Haltekörpers (3) auf die zweite haftklebrige Klebefläche (23) des Klebestreifens (2);
e) Ausübung von Druck auf jede der Andruckflächen (11, 12, 13) des Haltekörpers (3), wobei sich die von einer der haftklebrigen Klebeflächen (22, 23) des Klebestreifens (2) benetzte Oberfläche mit jeder Ausübung von Druck auf eine Andruckfläche (11, 12, 13) erhöht.

## Claims

1. Retaining body (3) for fastening on a surface (21), wherein the retaining body (3) is fixable on the surface (21) by means of a double-sided adhesive strip (2) with two oppositely situated adhesive surfaces, wherein the retaining body (3) comprises a basic body (16) with a flat rear surface (19) and a front surface (27) which is located opposite the rear surface (19), wherein a carrier element (4), which protrudes from a plane of the basic body (16) is realized on the front surface (27) of the basic body (16), wherein the basic body (16) comprises a reinforcing structure with reinforcing ribs (6, 7) on the front surface (27), wherein the reinforcing ribs (6, 7) are formed in one piece with and on the basic body (16) and divide the front surface (27) of the basic body (16) into at least two differently sized pressing surfaces (11, 13), wherein the carrier element (4) rises out of the basic body (16) from a base (25) which is arranged in a point of applied force, and wherein, proceeding from the point of applied force (25), there is provided at least one pressing surface (11) which is arranged in the opposite direction to the main load direction and there is provided at least one pressing surface (13) which is arranged in the main load direction and which is greater than the pressing surface (11) which is arranged in the opposite direction, **characterized in that** the reinforcing ribs (6, 7) converge in the base (25).

2. Retaining body (3) according to Claim 1, **characterized in that** the reinforcing ribs (5, 6, 7) divide the front surface into at least three pressing surfaces (11, 12, 13).

3. Retaining body (3) according to Claim 1 or 2, **characterized in that** a first reinforcing rib (5) extends from the point of applied force (25) of the carrier element (4) counter to the main load direction.

4. Retaining body (3) according to one of the preceding claims, **characterized in that** a second reinforcing rib (6) and a third reinforcing rib (7) extend symmetrically to a symmetry plane through the basic body (16), in particular in a mirror-symmetrical manner to a longitudinal axis parallel to the main load direction and through the carrier element (4).

5. Retaining body (3) according to one of the preceding claims, **characterized in that** in the view of the front surface (27) of the basic body (16), the surface areas of the reinforcing ribs (5, 6, 7) are smaller than the surface areas of the pressing surfaces (11, 12, 13).

6. Retaining body (3) according to one of the preceding claims, **characterized in that** a normal projection of the carrier element (4) onto the rear surface (19) of the basic body (16) lies outside the corresponding normal projections of the pressing surfaces (11, 12, 13).

7. Retaining body (3) according to one of the preceding claims, **characterized in that** the basic body (16) is scarfed on one side.

8. Retaining body (3) according to one of the preceding claims, **characterized in that** the retaining body (3) is produced from a fiber-reinforced plastics material.

9. Retaining body (3) according to one of the preceding claims, **characterized in that** the retaining body (3) is produced on the basis of one of the following materials: polystyrene (PS), in particular a syndiotactic polystyrene (PS-S), styrene acrylonitrile (SAN), acrylonitrile-styrene-acrylate (ASA), acrylonitrile-butadiene-styrene (ABS) and polyamide (PA).

10. Retaining body (3) according to one of Claims 1 to 8, **characterized in that** the retaining body (3) is produced on the basis of a polyether ether ketone (PEEK), wherein the retaining body (3) is produced, in particular, by hot pressing.

11. Retaining body (3) according to one of the preceding claims, **characterized in that** the reinforcing ribs (5, 6, 7) extend out of the base (25) in a star-shaped or compartment-shaped manner.

12. Retaining body (3) according to one of the preceding claims, **characterized in that** the carrier element (4) is realized in the form of a sloping elliptical truncated cone or in the form of a rose thorn with a tapering end.

13. Retaining body (3) according to one of the preceding claims, **characterized in that** the carrier element (4) carries a support plate on its free end.

14. Retaining body (3) according to one of the preceding claims, **characterized in that** one smaller pressing surface (11) comprises a surface area of between 0.6 cm² and 2 cm² and/or two smaller pressing surfaces of the at least three pressing surfaces (11, 12) each comprise a surface area of between 0.6 cm² and 2.3 cm² and/or one larger pressing surface (13) comprises a surface area of at least 2.5 cm².

15. Retaining body (3) according to one of the preceding claims, **characterized in that** the basic body (16) is delimited by side edges (31, 32), wherein positioning notches (14) are realized on the side edges (31, 32) in each case at the same height, in a preferred manner at the height of the carrier element (4).

16. Retaining body (3) according to one of the preceding claims, **characterized in that** a vent duct (20), which is preferably realized with a V-shaped profile, is provided on the rear surface (19) of the retaining body (3).

17. Retaining body (3) according to Claim 16, **characterized in that** the vent duct (20) runs at least in portions under one of the reinforcing ribs (5, 6, 7), preferably under the first reinforcing rib (5).

18. Retaining device (1) with a retaining body (3) according to one of the preceding claims and with an adhesive strip (2) which is effective on two sides and is attached on the rear surface (19) of the basic body (16) of the retaining body (3) or is attachable on said rear surface (19).

19. Retaining device (1) according to Claim 18, **characterized in that** the adhesive strip (2), which is effective on two sides, comprises a non-adhesive part portion (24), wherein the non-adhesive part portion (24) projects beyond at least one side of the rear surface (19) of the basic body (16).

20. Method for installing a retaining device (1) having a retaining body (3) according to one of Claims 1 to 17 as well as an adhesive strip (2), which is effective on two sides and has two oppositely situated sticky adhesive surfaces (22, 23) which are each covered by a protective foil (28, 29), said method including the following steps:
a) remove the first protective foil (28) from the first sticky adhesive surface (22) of the adhesive strip (2) which is effective on two sides;
b) apply the first sticky adhesive surface (22) of the adhesive strip (2) onto a surface (21);
c) remove the second protective foil (29) from the second sticky adhesive surface (23) of the adhesive strip (2);
d) place the rear surface (19) of the retaining body (3) onto the second sticky adhesive surface (23) of the adhesive strip (2);
e) exert pressure onto each of the pressing surfaces (11, 12, 13) of the retaining body (3), wherein the surface moistened by one of the sticky adhesive surfaces (22, 23) of the adhesive strip (2) increases with each exertion of pressure onto a pressing surface (11, 12, 13).

## Revendications

1. Corps de retenue (3) destiné à être fixé à une surface (21), le corps de retenue (3) pouvant être fixé à la surface (21) au moyen d'un ruban adhésif (2) double face doté de deux surfaces adhésives opposées (21), le corps de retenue (3) comprenant un corps de base (16) doté d'une face arrière plane (19) et d'une face avant (27) opposée à la face arrière (19), un élément de support (4) faisant saillie hors d'un plan du corps de base (16) étant formé sur la face avant (27) du corps de base (16), le corps de base (16) comprenant sur la face avant (27) une structure de renforcement dotée de nervures de renforcement (6, 7), les nervures de renforcement (6, 7) étant formées d'un seul tenant avec le corps de base (16) et sur celui-ci et divisant la face avant (27) du corps de base (16) en au moins deux faces de pression (11, 13) de tailles différentes,
l'élément de support (4) s'élevant du corps de base (16) à partir d'une base (25) disposée dans un point d'application de force et, à partir du point d'application de force (25), au moins une face de pression (11) disposée en sens inverse à la direction de charge principale étant prévue, et au moins une face de pression (13) disposée dans la direction de charge principale étant prévue, cette face de pression étant plus grande que la face de pression (11) disposée dans le sens inverse, **caractérisé en ce que** les nervures de renforcement (6, 7) convergent dans la base (25).

2. Corps de retenue (3) selon la revendication 1, **caractérisé en ce que** les nervures de renforcement (5, 6, 7) divisent la face avant en au moins trois faces de pression (11, 12, 13).

3. Corps de retenue (3) selon la revendication 1 ou 2, **caractérisé en ce qu'**une première nervure de renforcement (5) s'étend à partir du point d'application de force (25) de l'élément de support (4) en sens inverse à la direction de charge principale.

4. Corps de retenue (3) selon l'une des revendications précédentes, **caractérisé en ce qu'**une deuxième nervure de renforcement (6) et une troisième nervure de renforcement (7) s'étendent symétriquement par rapport à un plan de symétrie à travers le corps de base (16), en particulier suivant une symétrie spéculaire par rapport à un axe longitudinal parallèle à la direction de charge principale et à travers l'élément de support (4).

5. Corps de retenue (3) selon l'une des revendications précédentes, **caractérisé en ce que**, dans la vue de la face avant (27) du corps de base (16), les superficies des nervures de renforcement (5, 6, 7) sont plus petites que les superficies des faces de pression (11, 12, 13).

6. Corps de retenue (3) selon l'une des revendications précédentes, **caractérisé en ce qu'**une projection normale de l'élément de support (4) sur la face arrière (19) du corps de base (16) se situe à l'extérieur des projections normales correspondantes des faces de pression (11, 12, 13) .

7. Corps de retenue (3) selon l'une des revendications précédentes, **caractérisé en ce que** le corps de base (16) est biseauté d'un côté.

8. Corps de retenue (3) selon l'une des revendications précédentes, **caractérisé en ce que** le corps de retenue (3) est fabriqué à partir d'une matière synthétique renforcée par des fibres.

9. Corps de retenue (3) selon l'une des revendications précédentes, **caractérisé en ce que** le corps de retenue (3) est fabriqué sur la base de l'une des matières suivantes : polystyrène (PS), en particulier polystyrène syndiotactique (PS-S), styrène-acrylonitrile (SAN), acrylonitrile-styrène-acrylester (ASA), acrylonitrile-butadiène-styrène (ABS), polyamids (PA).

10. Corps de retenue (3) selon l'une des revendications 1 à 8, **caractérisé en ce que** le corps de retenue (3) est fabriqué sur la base d'une polyétheréthercétone (PEEK), le corps de retenue (3) étant fabriqué en particulier par pressage à chaud.

11. Corps de retenue (3) selon l'une des revendications précédentes, **caractérisé en ce que** les nervures de renforcement (5, 6, 7) s'étendent en forme d'étoile ou en forme d'éventail à partir de la base (25).

12. Corps de retenue (3) selon l'une des revendications précédentes, **caractérisé en ce que** l'élément de support (4) est réalisé sous la forme d'un cône elliptique tronqué oblique ou sous la forme d'une épine de rose dotée d'une extrémité se terminant en pointe.

13. Corps de retenue (3) selon l'une des revendications précédentes, **caractérisé en ce que** l'élément de support (4) supporte, à son extrémité libre, un disque de retenue.

14. Corps de support (3) selon l'une des revendications précédentes, **caractérisé en ce qu'**une face de pression (11) plus petite présente une superficie de 0,6 cm² à 2 cm² et/ou deux plus petites desdites au moins trois faces de pression (11, 12) présentent respectivement une superficie de 0,6 cm² à 2,3 cm² et/ou une face de pression (13) plus grande présente une superficie d'au moins 2,5 cm².

15. Corps de retenue (3) selon l'une des revendications précédentes, **caractérisé en ce que** le corps de base (16) est délimité par des bords latéraux (31, 32), des entailles de positionnement (14) étant réalisées respectivement à la même hauteur, de préférence à hauteur de l'élément de support (4) sur les bords latéraux (31, 32) .

16. Corps de retenue (3) selon l'une des revendications précédentes, **caractérisé en ce qu'**un canal d'aération (20) est prévu sur la face arrière (19) du corps de retenue (3), lequel canal d'aération est formé de préférence suivant un profil en forme de V.

17. Corps de retenue (3) selon la revendication 16, **caractérisé en ce que** le canal d'aération (20) s'étend au moins dans certaines parties en dessous de l'une des nervures de renforcement (5, 6, 7), de préférence en dessous de la première nervure de renforcement (5).

18. Dispositif de retenue (1) comprenant un corps de retenue (3) selon l'une des revendications précédentes et un ruban adhésif (2) effectif de manière bilatérale, lequel est appliqué sur la face arrière (19) du corps de base (16) du corps de retenue (3) ou peut être appliqué sur cette face arrière (19).

19. Dispositif de retenue (1) selon la revendication 18, **caractérisé en ce que** le ruban adhésif (2) agissant de manière bilatérale comprend une partie (24) non adhésive, la partie (24) non adhésive faisant saillie au-delà d'au moins un côté de la face arrière (19) du corps de base (16) .

20. Procédé de montage d'un dispositif de retenue (1) comprenant un corps de retenue (3) selon l'une des revendications 1 à 17 ainsi qu'un ruban adhésif (2) effectif de manière bilatérale doté de deux faces adhésives (22, 23) collantes opposées l'une à l'autre, lesquelles sont recouvertes respectivement par un film protecteur (28, 29), comportant les étapes suivantes consistant à :
a) retirer le premier film protecteur (28) de la première face adhésive (22) collante du ruban adhésif (2) effectif de manière bilatérale ;
b) appliquer la première face adhésive (22) collante du ruban adhésif (2) sur une surface (21) ;
c) retirer le deuxième film protecteur (29) de la deuxième face adhésive (23) collante du ruban adhésif (2) ;
d) placer la face arrière (19) du corps de retenue (3) sur la deuxième face adhésive (23) collante du ruban adhésif (2) ;
e) exercer une pression sur chacune des faces de pression (11, 12, 13) du corps de retenue (3), la surface mouillée par l'une des faces adhésives (22, 23) collantes du ruban adhésif (2) augmentant à chaque application de pression sur une face de pression (11, 12, 13).
